# EUROPEAN PATENT APPLICATION

(11) **EP 4 830 954 A1**
(43) Date of publication of application: **28.10.2026**
(21) Application number: 25751537.9
(22) Date of filing: 06.02.2025
(51) Int. Cl.: B60J 1/00

(54) **TRI-MATERIAL INJECTION-MOLDED GLASS ASSEMBLY**

(30) Priority: 07.02.2024 CN 202410171391
(71) Applicant: Fuyao Glass Industry Group Co., Ltd., Fuqing, Fujian 350300 (CN)
(72) Inventor: ZHANG, Ke, Fuqing, Fujian 350300 (CN); LIN, Zhiwei, Fuqing, Fujian 350300 (CN); LIU, Xianping, Fuqing, Fujian 350300 (CN)
(74) Representative: Mewburn Ellis LLP
(86) International application number: PCT/CN2025/075871
(87) International publication number: WO 2025/167938

(57) **Abstract**

A tri-material injection-molded glass assembly is provided, which includes a glass (1) and an encapsulation (2). The encapsulation (2) covers at least one surface of at least one edge portion of the glass (1). The encapsulation (2) includes a first encapsulation layer (21), a second encapsulation layer (22), and a third encapsulation layer (23). The first encapsulation layer (21) is injection-molded on at least one surface of an edge portion of the glass. At least a portion of the second encapsulation layer (22) is injection-molded to cover the first encapsulation layer (21), and a hardness of the second encapsulation layer (22) is greater than a hardness of the first encapsulation layer (21). The third encapsulation layer (23) is injection-molded to cover at least a portion of the second encapsulation layer (22), and a hardness of the third encapsulation layer (23) is less than the hardness of the second encapsulation layer (22). In this glass assembly, the first encapsulation layer (21) covers the glass, and the second encapsulation layer (22) is injection-molded to cover the first encapsulation layer (21), such that tight fitting may be achieved between the glass and the first encapsulation layer (21), as well as between the first encapsulation layer (21) and the second encapsulation layer (22). As a result, impairment to sealing performance and waterproof performance of the glass assembly caused by shrinkage and edge warping of the rigid second encapsulation layer (22) is avoided.

## Description

This application claims priority to Chinese Patent Application No. 202410171391.7, filed February 7, 2024, and entitled "TRI-MATERIAL INJECTION-MOLDED GLASS ASSEMBLY", the entire disclosure of which is incorporated herein by reference.

### TECHNICAL FIELD

The present disclosure relates to the field of automotive glass technology, and in particular, to a tri-material injection-molded glass assembly.

### BACKGROUND

With the continuous development of automotive technology, users have higher requirements for the sealing performance and sound insulation performance of automotive glass. An encapsulation is generally formed on a periphery of automotive glass by an injection molding process, so as to enhance sealing performance and provide protection.

In the related art, a glass encapsulation is usually fixed to the glass by injection molding. The glass and injection molding pellets are first placed together into a mold cavity to injection-mold a rigid encapsulation, and then a soft encapsulation is injection-molded on the injection-molded semi-finished product, thus completing the injection molding production process of a dual-material injection-molded encapsulation product with guide rails.

Since a primer coating process cannot be applied to an entire bonding area of the glass, the rigid encapsulation needs to surround a periphery of the glass to form a closed annular structure, and the rigid encapsulation is fixed by relying on support of the glass. Since the rigid plastic is in rigid contact with the glass, and due to the limitations of the primer coating process, the rigid plastic tends to shrink and deform due to material characteristics, which easily leads to ineffective bonding areas and gaps between the rigid plastic and the surface of the glass. Locally ineffective bonding areas have poor resistance to penetration of smoke and liquid. Under extreme test conditions, smoke or liquid may permeate from an outer side of the product to a back side of the product, thereby adversely affecting a riding experience of passengers.

A shrinkage rate of rigid encapsulation material at room temperature is about 5‰ to 10‰. In extreme environments, such as -30°C, an injection-molded product undergoes greater shrinkage and deformation, and a deformation rate of some materials can even reach approximately 15%o at low temperatures. This is an inherent physical property of the material and cannot be avoided merely by structural optimization.

During implementation of the present invention, the inventors have found that the related art has the following problems: a conventional rigid encapsulation is prone to warping and deformation, resulting in gaps between the rigid encapsulation and the glass. This causes smoke or liquid to leak from a back side of the glass to a front side of the glass, thereby affecting sealing performance and waterproof performance of the glass assembly.

### SUMMARY

In view of the above problems, there is a need to provide a technical solution for improving a fitting degree between the rigid encapsulation and the glass, so as to solve the problem in the related art that the rigid encapsulation is prone to warping and deformation.

To achieve the above object, the disclosure provides a tri-material injection-molded encapsulation assembly including a glass and an encapsulation. The encapsulation covers at least one surface of at least one edge portion of the glass. The encapsulation includes a first encapsulation layer, a second encapsulation layer, and a third encapsulation layer. The first encapsulation layer is injection-molded on at least one surface of an edge portion of the glass. At least a portion of the second encapsulation layer is injection-molded to cover the first encapsulation layer, and a hardness of the second encapsulation layer is greater than a hardness of the first encapsulation layer. The third encapsulation layer is injection-molded to cover at least a portion of the second encapsulation layer, and a hardness of the third encapsulation layer is less than the hardness of the second encapsulation layer.

In some other embodiments, the first encapsulation layer is provided with a first connecting portion, and the first connecting portion is disposed on a surface of the first encapsulation layer in contact with the second encapsulation layer.

In some other embodiments, the first connecting portion is a protrusion or a recess.

In some other embodiments, the first connecting portion on a side surface of the first encapsulation layer is a protrusion.

In some other embodiments, the second encapsulation layer is provided with a second connecting portion, and the second connecting portion is disposed on a surface of the second encapsulation layer in contact with the third encapsulation layer.

In some other embodiments, a contact length between the first encapsulation layer and an inner surface of the glass is less than 5mm.

In some other embodiments, a thickness of the first encapsulation layer is not greater than 5mm.

In some other embodiments, the first encapsulation layer and the third encapsulation layer are made of a soft plastic, and the second encapsulation layer is made of a rigid plastic.

In some other embodiments, the first encapsulation layer and the third encapsulation layer are made of the same material.

In some other embodiments, the soft plastic has a Shore hardness of 60 - 95.

In some other embodiments, the soft plastic is thermoplastic elastomer (TPE), polyvinyl chloride (PVC), polyurethane (PU), or ethylene propylene diene monomer (EPDM).

In some other embodiments, the rigid plastic has a Rockwell hardness of 40 - 95.

In some other embodiments, the rigid plastic is polypropylene (PP), polyvinyl chloride (PVC), polyamide (PA), polyoxymethylene (POM), polycarbonate (PC), acrylonitrile butadiene styrene (ABS), or styrene-acrylonitrile copolymer (SAN).

In some other embodiments, the second encapsulation layer includes a mounting portion, and the mounting portion is integrally injection-molded with the second encapsulation layer.

In some other embodiments, the glass assembly further includes a sheet metal member provided with a first through hole penetrating the sheet metal member in a thickness direction of the sheet metal member. The mounting portion is a stud, and the stud extends into the first through hole and is fixedly connected to the sheet metal member.

In some other embodiments, the stud is provided with a fixing groove configured for snap-fit engagement with the sheet metal member.

In some other embodiments, the third encapsulation layer is provided with a sealing lip protruding outwardly.

In some other embodiments, the number of sealing lips is two or more, and at least one of the sealing lips abuts against the sheet metal member.

Different from the related art, in the above technical solution, a soft first encapsulation layer is disposed between the glass and the rigid second encapsulation layer, and the second encapsulation layer is tightly bonded to the first encapsulation layer, thereby being firmly fixed to the glass. When the second encapsulation layer shrinks and deforms, the side of the first encapsulation layer in contact with the second encapsulation layer deforms correspondingly, so that a tight connection is always maintained between the first encapsulation layer and the second encapsulation layer, while the other side of the first encapsulation layer is always fixedly connected to the glass. Such an arrangement effectively improves the bonding force between the encapsulation and the glass, such that tight fitting may be achieved between the glass and the first encapsulation layer, as well as between the first encapsulation layer and the second encapsulation layer. As a result, impairment to sealing performance and waterproof performance of the glass assembly caused by shrinkage and edge warping of the rigid second encapsulation layer is avoided, and displacement of the first encapsulation layer due to excessive pressure during injection molding of the second encapsulation layer is also avoided.

The above contents related to the summary of the invention is merely an overview of the technical solution of the disclosure. In order to enable a person of ordinary skill in the art to more clearly understand the technical solution of the disclosure, and then to implement it according to the contents recorded in the text of the specification and the drawings, and in order to make the above object and other objects, features, and advantages of the disclosure more readily understandable, the following illustration is made in conjunction with the specific embodiments of the disclosure and the accompanying drawings.

### BRIEF DESCRIPTION OF THE DRAWINGS

The drawings are only used for illustrating the principles, implementations, applications, features, effects, and the like of the specific embodiments of the disclosure and other related contents, and may not be considered as limitations to the disclosure.

**In** the drawings of the specification:
FIG. 1 is a schematic cross-sectional structural view of a tri-material injection-molded glass assembly according to an embodiment of the disclosure.
FIG. 2 is a schematic structural view of the tri-material injection-molded glass assembly according to an embodiment of the disclosure applied to a quarter window.
FIG. 3 is an enlarged sectional view of the tri-material injection-molded glass assembly in FIG. 2, taken along line A-A.
FIG. 4 is a modified example of the enlarged sectional view taken along line A-A of the embodiment in FIG. 3.
FIG. 5 is a modified example of the enlarged sectional view taken along line A-A of the embodiment in FIG. 3.
FIG. 6 is a modified example of the schematic cross-sectional structural view in FIG. 1.
FIG. 7 is a modified example of the schematic cross-sectional structural view in FIG. 1.
FIG. 8 is an enlarged sectional view of the tri-material injection-molded glass assembly in FIG. 2, taken along line B-B.
FIG. 9 is a modified example of the enlarged sectional view of the tri-material injection-molded glass assembly in FIG. 7, taken along line B-B.
FIG. 10 is a schematic structural view of the tri-material injection-molded glass assembly according to another embodiment of the disclosure applied to a quarter window.
FIG. 11 is a modified example of the enlarged view of the tri-material injection-molded glass assembly in FIG. 10.
FIG. 12 is a modified example of the enlarged view of the tri-material injection-molded glass assembly in FIG. 10.
FIG. 13 is an enlarged sectional view of the tri-material injection-molded glass assembly in FIG. 12, taken along line C-C.
FIG. 14 is an enlarged sectional view of the tri-material injection-molded glass assembly in FIG. 12, taken along line D-D.
FIG. 15 is a modified example of the enlarged sectional view of the tri-material injection-molded glass assembly in FIG. 14, taken along line D-D.
FIG. 16 is an enlarged sectional view of the tri-material injection-molded glass assembly in FIG. 12, taken along line E-E.
FIG. 17 is a modified example of the enlarged sectional view taken along line E-E in FIG. 16.
FIG. 18 is a modified example of the enlarged sectional view taken along line E-E in FIG. 16.
FIG. 19 is a schematic structural view of a tri-material injection-molded glass assembly according to another embodiment of the disclosure.

The reference signs involved in the above drawings are described as follows:
1: glass;
2: encapsulation; 21: first encapsulation layer; 211: first connecting portion; 22: second encapsulation layer; 221: mounting portion; 222: second connecting portion; 223: fixing groove; 23: third encapsulation layer; 231: sealing lip;
3: sheet metal member.

### DETAILED DESCRIPTION

In order to describe the possible application scenarios, technical principles, implementable specific solutions, achievable purposes and effects, etc., of the disclosure in detail, the following detailed illustration is given in conjunction with the listed specific embodiments and the accompanying drawings. The embodiments recorded herein are only used for more clearly illustrating the technical solution of the disclosure, and are therefore merely provided as examples, and shall not be used to limit the protection scope of the disclosure.

Mentioning "embodiment" herein means that specific features, structures, or characteristics described in conjunction with the embodiment may be included in at least one embodiment of the disclosure. The term "embodiment" appearing in various places in the illustration does not necessarily refer to the same embodiment, nor specifically limit the independence or association between it and other embodiments. In principle, in the disclosure, as long as no technical contradiction or conflict exists, the various technical features mentioned in each embodiment may be combined in any manner to form a corresponding implementable technical solution.

Unless otherwise defined, the meanings of the technical terms used herein are the same as those commonly understood by those skilled in the art to which the disclosure belongs; the use of the related terms herein is only for describing specific embodiments, rather than to limit the disclosure.

In the disclosure, the term "and/or" is an expression used to describe logical relationships between objects, and indicates that three kinds of relationships can exist. For example, A and/or B indicates three cases: only A exists, only B exists, and both A and B exist simultaneously. In addition, the character "/" herein generally indicates that the objects connected thereby are in an "or" logical relationship.

In the disclosure, terms such as "first" and "second" are used only to distinguish one entity or operation from another entity or operation, and do not necessarily require or imply any actual quantity, priority, or sequential relationship between these entities or operations.

Without further limitation, the expressions "comprising", "including", "having" or other similar expressions used in the sentences in the disclosure are intended to cover non-exclusive inclusion, and these expressions do not exclude the presence of additional elements in the process, method, or product that includes the stated elements, so that the process, method, or product including a series of elements not only includes those defined elements, but also may include other elements not explicitly listed, or also includes elements inherent to such process, method, or product.

Same as the understanding in the Guidelines for Patent Examination, in the disclosure, expressions such as "greater than", "less than", and "exceeding" are understood as excluding the given number; expressions such as "above", "below", and "within" are understood as including the given number. In addition, in the embodiments of the disclosure, "multiple" means two or more (including two), and similar expressions related to "plural" are also understood in this way, such as "multiple groups", "multiple times", etc., unless specifically and explicitly defined otherwise.

In the embodiments of the disclosure, the spatially relative terms used, such as "center", "longitudinal", "transverse", "length", "width", "thickness", "up", "down", "front", "back", "left", "right", "vertical", "horizontal", "perpendicular", "top", "bottom", "inner", "outer", "clockwise", "counterclockwise", "axial", "radial", "circumferential", etc., indicate orientations or positional relationships based on those shown in the specific embodiments or drawings, and are only for the convenience of describing the specific embodiments of the disclosure or for the convenience of readers' understanding, and do not indicate or imply that the referred device or component must have a specific position, a specific orientation, or be constructed and operated in a specific orientation, and therefore cannot be construed as limiting the embodiments of the disclosure.

Unless otherwise explicitly specified or defined, the terms used in the embodiments of the disclosure, such as "mounted", "connected", "coupled", "fixed", "provided", etc., should be understood in a broad sense. For example, the "connection" may be a fixed connection, or a detachable connection, or an integral formation; it may be a mechanical connection, or an electrical connection, or a communication connection; it may be a direct connection, or an indirect connection through an intermediate medium; it may be an internal communication between two elements or an interactive relationship between two elements. For those skilled in the art to which the disclosure belongs, the specific meanings of the above terms in the embodiments of the disclosure can be understood according to specific circumstances.

In the related art, a primer coating is usually applied to a bonding area of automotive glass before a rigid encapsulation is injection molded. Due to limitations of the primer coating process, the primer cannot be applied to an entire bonding area. In addition, the rigid encapsulation is prone to shrinkage, which easily leads to bonding failure with a surface of the glass without primer coating, thereby forming gaps between the encapsulation and the surface of the glass. Smoke and liquid may penetrate from an exterior of a vehicle into an interior of the vehicle, resulting in poor sealing effect.

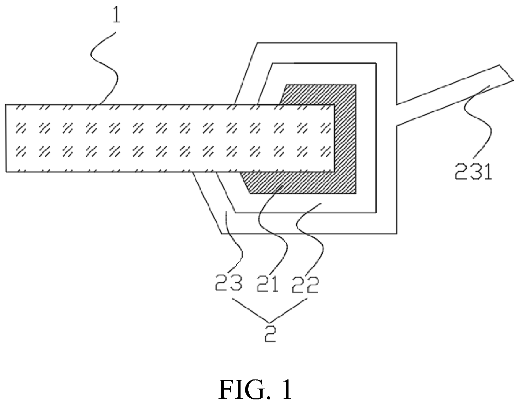

Referring to FIG. 1, the embodiment provides a tri-material injection-molded glass assembly, which includes a glass 1 and an encapsulation 2. The tri-material injection-molded glass assembly is used in the field of automotive glass technology, and specifically may be applicable to automotive quarter window structures. The glass may be conventional glass commonly used for automotive quarter windows. Without limitation, the glass may be tempered glass, laminated glass, etc., and may also be acrylic glass or inorganic glass. No further limitations are imposed on the type of glass in the present disclosure.

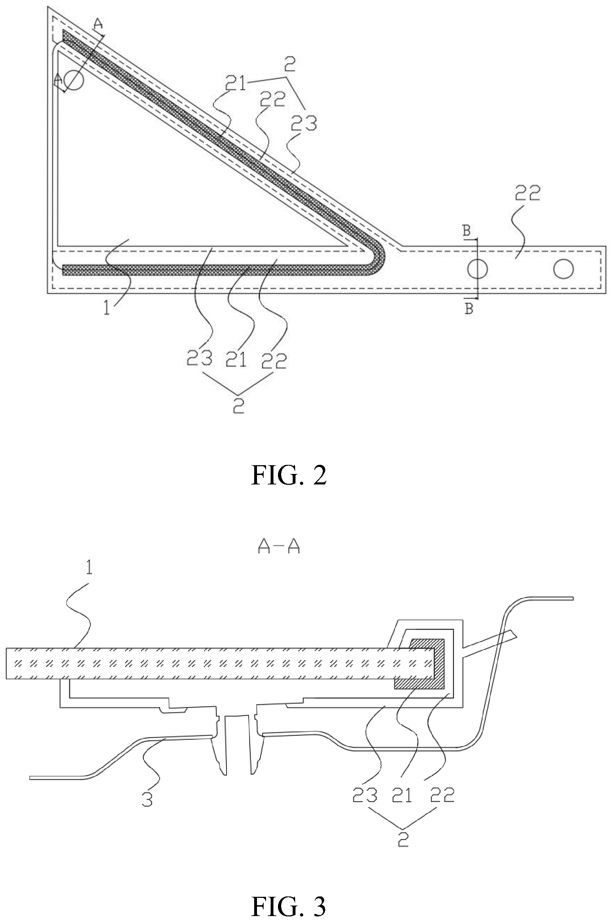

FIG. 2 shows the application of the tri-material injection-molded glass assembly on a quarter window. FIG. 3 is a sectional view taken along line A-A in FIG. 2. The encapsulation 2 covers at least one surface of at least one edge portion of the glass 1. The encapsulation 2 includes a first encapsulation layer 21, a second encapsulation layer 22, and a third encapsulation layer 23. The first encapsulation layer 21 is injection-molded on at least one surface of an edge portion of the glass; at least a portion of the second encapsulation layer 22 is injection-molded to cover the first encapsulation layer 21, and a hardness of the second encapsulation layer 22 is greater than a hardness of the first encapsulation layer 21. The third encapsulation layer 23 covers at least a portion of the second encapsulation layer 22, and a hardness of the third encapsulation layer 23 is less than the hardness of the second encapsulation layer 22.

The first encapsulation layer 21 may be disposed on at least one of an upper end surface, a side end surface, and a lower end surface of the edge portion of the glass. At least a portion of the second encapsulation layer 22 is injection-molded to cover the first encapsulation layer 21. Specifically, the first encapsulation layer 21 is entirely covered by the second encapsulation layer 22. The shape and the length of the first encapsulation layer 21 may be designed according to the shape and requirements of the second encapsulation layer 22.

The third encapsulation layer 23 is injection-molded to cover at least a portion of the second encapsulation layer 22. Specifically, the third encapsulation layer 23 only partially covers a local portion of the second encapsulation layer 22. The third encapsulation layer 23 partially covers the outer side of the second encapsulation layer 22, and the shape and structure of the third encapsulation layer 23 may be adjusted and designed according to actual production needs.

In the related art, a rigid plastic is used for the second encapsulation layer 22, which not only results in relatively high injection molding pressure and temperature, thereby affecting the finished product yield of the glass, but also tends to detach from the glass and warp. In the present solution, the first encapsulation layer 21 is disposed between the glass and the second encapsulation layer 22, and the first encapsulation layer 21 is disposed on the glass by injection molding, such that the second encapsulation layer 22 can be tightly and stably fixed to the glass via the first encapsulation layer 21. The deformation caused by cooling shrinkage of the second encapsulation layer 22 can be compensated by the first encapsulation layer 21, thus avoiding formation of gaps between the encapsulation and the glass. Moreover, the first encapsulation layer 21 can also provide a buffering effect, thereby improving the finished product yield of glass after injection molding of the rigid encapsulation.

Different from the related art, in the above technical solution, the soft first encapsulation layer 21 is disposed between the glass 1 and the rigid first encapsulation layer 21, and the first encapsulation layer 21 is tightly bonded to the first encapsulation layer 21, thereby being firmly fixed to the glass 1. When the first encapsulation layer 21 shrinks and deforms, the side of the first encapsulation layer 21 in contact with the first encapsulation layer 21 deforms correspondingly, so that a tight connection is always maintained between the first encapsulation layer 21 and the first encapsulation layer 21, while another side of the first encapsulation layer 21 is always fixedly connected to the glass 1. Such an arrangement effectively improves the bonding force between the encapsulation and the glass 1, such that tight fitting may be achieved between the glass 1 and the first encapsulation layer 21, as well as between the first encapsulation layer 21 and the first encapsulation layer 21. As a result, impairment to sealing performance and waterproof performance of the glass assembly caused by shrinkage and edge warping of the rigid first encapsulation layer 21 is avoided, and smoke or liquid penetrating from the outer side of the product into the inner side of the product is avoided. Moreover, the first encapsulation layer 21 serves as a buffer layer and improves the finished product yield of glass after injection molding of the rigid encapsulation.

In some other embodiments, the first encapsulation layer 21 and the third encapsulation layer 23 are made of soft plastic, and the second encapsulation layer 22 is made of rigid plastic. Further, the soft plastic has a Shore hardness of 60 - 95. Optionally, the Shore hardness of the soft plastic may be 65, or 70, 80, 85, 90, 95, etc. Materials with a Shore hardness of 70 - 95 are selected for the first encapsulation layer 21 and the third encapsulation layer 23, so that the first encapsulation layer 21 and the third encapsulation layer 23 have appropriate hardness and can undergo a certain degree of deformation. Optionally, the soft plastic is thermoplastic elastomer (TPE), polyvinyl chloride (PVC), polyurethane (PU), or ethylene propylene diene monomer (EPDM).

In some other embodiments, the second encapsulation layer 22 is made of rigid plastic. Rigid plastic generally refers to thermosetting plastic, which is processed by hot pressing and cannot be reprocessed for further use after molding. Specifically, the rigid plastic adopted in the present solution has a Rockwell hardness of 40 - 95. Without limitation, the Rockwell hardness of the rigid plastic may be 45, or 50, 55, ... 80, 90, etc. Optionally, the rigid plastic is polypropylene (PP), polyvinyl chloride (PVC), polyamide (PA), polyoxymethylene (POM), polycarbonate (PC), acrylonitrile butadiene styrene (ABS), or styrene-acrylonitrile copolymer (SAN).

In some other embodiments, the first encapsulation layer 21 and the third encapsulation layer 23 are made of the same material. Adopting the same material for the first encapsulation layer 21 and the third encapsulation layer 23 can simplify production procedures and lower production costs. Only the adhesion property between one type of soft material and the first encapsulation layer 21 needs to be taken into consideration. Without limitation, the third encapsulation layer 23 and the first encapsulation layer 21 may be made of different materials.

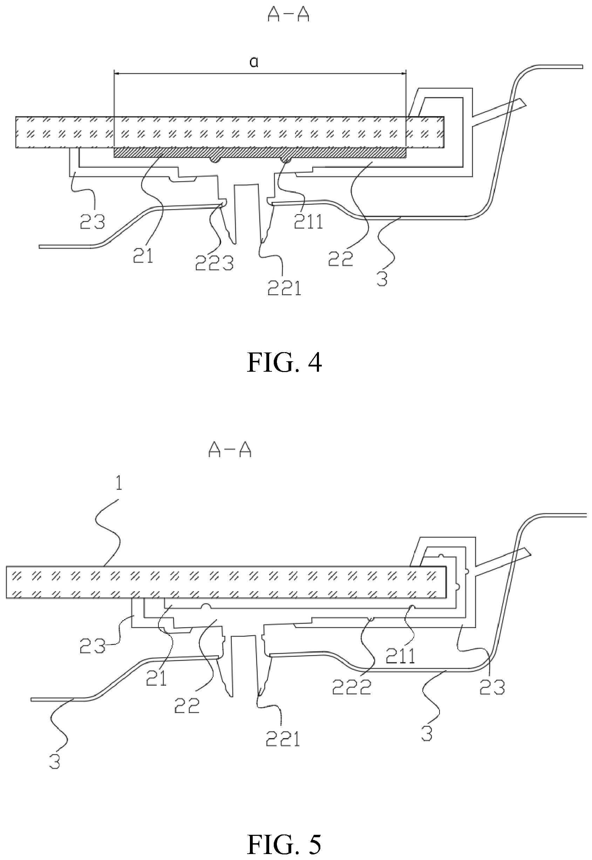

As illustrated in FIG. 4, in some other embodiments, the contact length between the first encapsulation layer 21 and the inner surface of the glass 1 is less than 5mm. The contact length between the first encapsulation layer 21 and the inner surface of the glass 1 is indicated as *α* in FIG. 4. Specifically, the contact length between the first encapsulation layer 21 and the inner surface of the glass 1 may be 3.0mm, or 3.2mm, 3.5mm, 3.8mm, 4.0mm, etc.

The first encapsulation layer 21 is tightly connected to the surface of the glass by injection molding. If the first encapsulation layer 21 is connected to the surface of the glass by bonding, since a relatively high injection pressure is required during injection molding of the second encapsulation layer 22, the first encapsulation layer 21 is prone to displacement during injection molding of the rigid second encapsulation layer 22. Therefore, when the first encapsulation layer 21 is connected to the surface of the glass 1 by bonding, to ensure a sufficient bonding area between the first encapsulation layer 21 and the glass 1 and to avoid displacement of the first encapsulation layer 21 during injection molding of the second encapsulation layer 22, the contact length between the first encapsulation layer 21 and the glass needs to be greater than 5mm. However, due to structural limitations of some vehicle models, an actual bonding length cannot meet a requirement for a bonding contact length between the first encapsulation layer 21 and the glass 1. Moreover, in actual production, when the first encapsulation layer 21 is bonded to the surface of the glass 1, it is difficult to achieve complete bonding between the first encapsulation layer 21 and the glass 1, resulting in poor bonding performance, and thus the first encapsulation layer 21 is prone to separate from the glass 1.

In the present solution, the first encapsulation layer 21 is injection-molded to cover the glass 1. Compared with an adhesive bonding manner, the connection between the injection-molded first encapsulation layer 21 and the glass 1 is more stable, and the length of contact between the first encapsulation layer 21 and the inner surface of the glass 1 can be reduced, which may be less than 5mm, and even as small as 3mm. With such an arrangement, the contact length between the first encapsulation layer 21 and the inner surface of the glass 1 can be controlled, thereby satisfying structural requirements of more vehicle models and helping to reduce an overall thickness of the encapsulation and improve the aesthetic appearance of the glass assembly.

In some other embodiments, as illustrated in FIG. 4, the first encapsulation layer 21 is provided with a first connecting portion 211, and the first connecting portion 211 is disposed on a surface of the first encapsulation layer 21 in contact with the second encapsulation layer 22. The first connecting portion 211 is configured to increase the bonding force between the first encapsulation layer 21 and the second encapsulation layer 22.

Further, the first connecting portion 211 is a protrusion or a recess. The first connecting portion 211 may be a protruding structure protruding from the surface of the first encapsulation layer 21, or a recessed structure recessed into the surface of the first encapsulation layer 21. With such an arrangement, the contact area between the first encapsulation layer 21 and the second encapsulation layer 22 can be increased, so that the first encapsulation layer 21 and the second encapsulation layer 22 are tightly connected, thereby improving the bonding force between the first encapsulation layer 21 and the second encapsulation layer 22. In some other embodiments, the first encapsulation layer 21 and the second encapsulation layer 22 may be engaged with each other via the first connecting portion 211.

In some other embodiments, the first connecting portion 211 protrudes from a side surface of the first encapsulation layer. As illustrated in FIG. 5, the first connecting portion 211 on the side surface of the first encapsulation layer 21 protrudes outwardly. In actual production, if the first connecting portion 211 on the side surface of the first encapsulation layer 21 is configured as a recess, higher requirements are imposed on the mold during demolding, and thus demolding may be more difficult. Therefore, the first connecting portions 211 on the side surface of the first encapsulation layer 21 are all configured as a protruding structure.

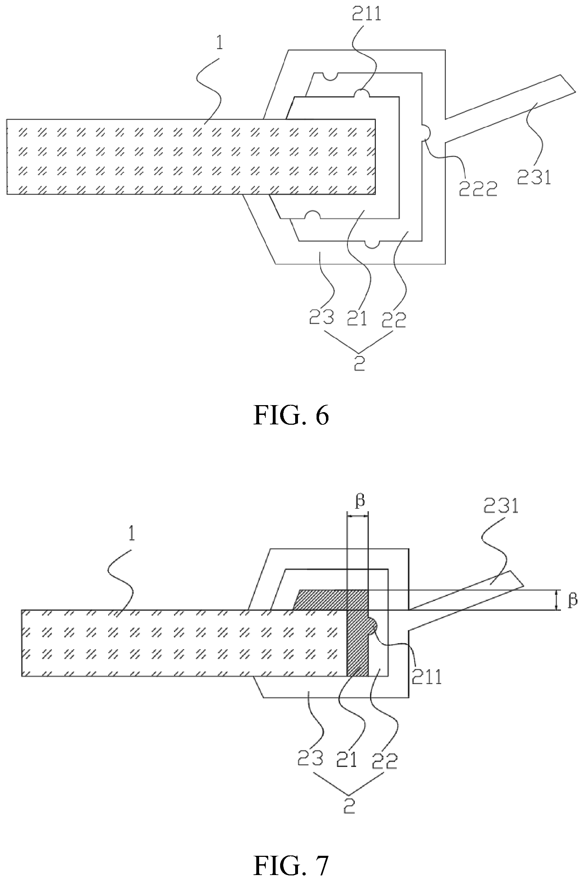

As illustrated in FIG. 5 and FIG. 6, in some other embodiments, the second encapsulation layer 22 is provided with a second connecting portion 222, and the second connecting portion 222 is disposed on a surface of the second encapsulation layer in contact with the third encapsulation layer. The second connecting portion 222 is configured to enhance the bonding force between the second encapsulation layer and the third encapsulation layer 23. The second connecting portion 222 may be a protrusion protruding from the second encapsulation layer 22 or a recess recessed into the second encapsulation layer 22. The second connecting portion 222 on the side surface of the second encapsulation layer 22 is configured as a protruding structure, which can lower the requirements on the mold during demolding.

As illustrated in FIG. 7, in some other embodiments, the thickness of the first encapsulation layer 21 is not greater than 5mm. The thickness of the first encapsulation layer 21 is indicated as *β* in FIG. 7. Specifically, the thickness may be 3mm, or 3.5mm, 4mm, etc. The thickness of the first encapsulation layer 21 should not be excessively large, otherwise the overall thickness of the encapsulation assembly may be affected.

As illustrated in FIG. 7, in some other embodiments, the second encapsulation layer 22 is provided with a mounting portion 221, and the mounting portion 221 is integrally injection-molded with the second encapsulation layer 22. The mounting portion 221 may be a guide rail, a buckle, a stud, or a mounting hole. The second encapsulation layer 22 is provided with the mounting portion 221, and the mounting portion 221 is integrally injection-molded with the second encapsulation layer 22, so that the production process is simplified without complicated manual assembly procedures or externally purchased accessories, which greatly reduces the production cost.

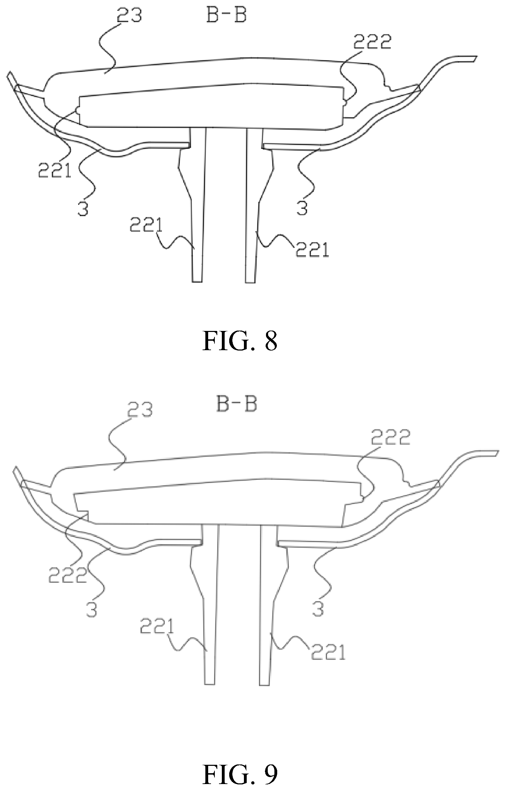

As illustrated in FIG. 8 and FIG. 9, in some embodiments, the glass assembly further includes a sheet metal member 3, and the sheet metal member 3 is provided with a first through hole penetrating the sheet metal member 3 in a thickness direction of the sheet metal member 3. The mounting portion 221 is a stud, and the stud extends into the first through hole and is fixedly connected to the sheet metal member 3.

As illustrated in FIG. 4, in some embodiments, the stud is provided with a fixing groove 223 configured for snap-fit engagement with the sheet metal member 3. The fixing groove 223 is engaged with the sheet metal member 3, thereby relatively fixing the stud and the sheet metal member 3. In some other embodiments, the third encapsulation layer 23 is provided with a sealing lip 231 protruding outwardly. The shape, quantity, and position of the sealing lip may be set according to actual needs. In some embodiments, the number (quantity) of the sealing lips 231 is two or more, and at least one of the sealing lips 231 abuts against the sheet metal member 3. Without limitation, the third encapsulation layer 23 may be provided with protrusions having mounting or supporting functions or recesses having mounting or supporting functions. By providing the third encapsulation layer 23 with shapes and structures adapted to the sheet metal member 3 and the guide rail, the sealing performance and structural stability of the glass assembly can be improved.

The existing dual-material injection-molded encapsulation needs to surround the periphery of the glass to form a closed annular structure, and the rigid encapsulation is fixed by relying on the support of the glass; otherwise, the rigid encapsulation is prone to separate and fall off from the glass after the first injection molding. In the present solution, a soft encapsulation is disposed on the inner side of the rigid encapsulation, which greatly improves the bonding force between the encapsulation and the glass. Therefore, the first encapsulation layer 21 and the second encapsulation layer 22 may be partially connected to the surface of the glass without forming a fully surrounding structure around the glass.

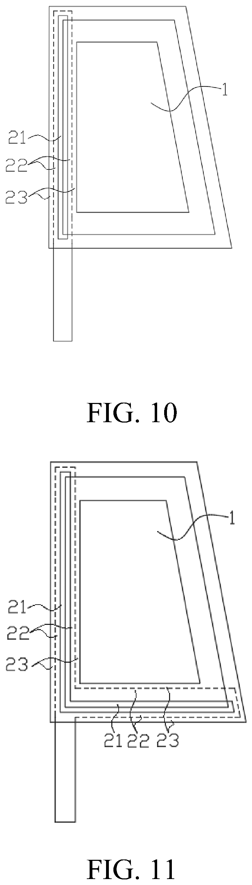

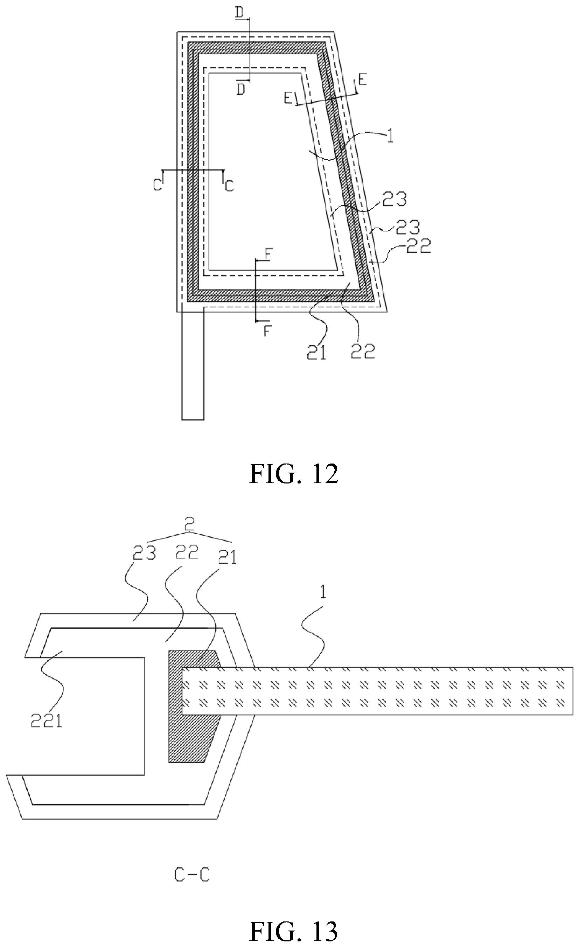

The encapsulation 2 covers at least one edge portion of the glass. As illustrated in FIG. 10, the encapsulation 2 includes the first encapsulation layer 21, the second encapsulation layer 22, and the third encapsulation layer 23. The first encapsulation layer 21, the second encapsulation layer 22, and the third encapsulation layer 23 are injection-molded to cover the edge portion of the glass 1. As illustrated in FIG. 11, the first encapsulation layer 21, the second encapsulation layer 22, and the third encapsulation layer 23 are injection-molded to cover two edge portions, i.e., the left edge portion and the lower edge portion, of the glass 1. As illustrated in FIG. 12, FIG. 12 is a modified example of the enlarged view of the tri-material injection-molded glass assembly in FIG. 10, and the encapsulation 2 is injection-molded to cover four edge portions of the glass 1. The encapsulation 2 can cover any edge portion of the glass 1, and the specific quantity and positions of the covered glass edge portions may be adjusted according to actual needs.

FIG. 12 shows the application of the tri-material injection-molded glass assembly on a door glass. FIG. 13 is an enlarged sectional view of the tri-material injection-molded glass assembly in FIG. 12, taken along line C-C. The first encapsulation layer 21 is injection-molded on the glass 1, covering the upper end surface, the side end surface, and the lower end surface of the glass 1. The second encapsulation layer 22 covers the outer side of the first encapsulation layer 21. One side of the second encapsulation layer 22 is provided with a mounting portion 221, and the mounting portion 221 is a guide rail. The third encapsulation layer 23 covers the outer side of the second encapsulation layer 22.

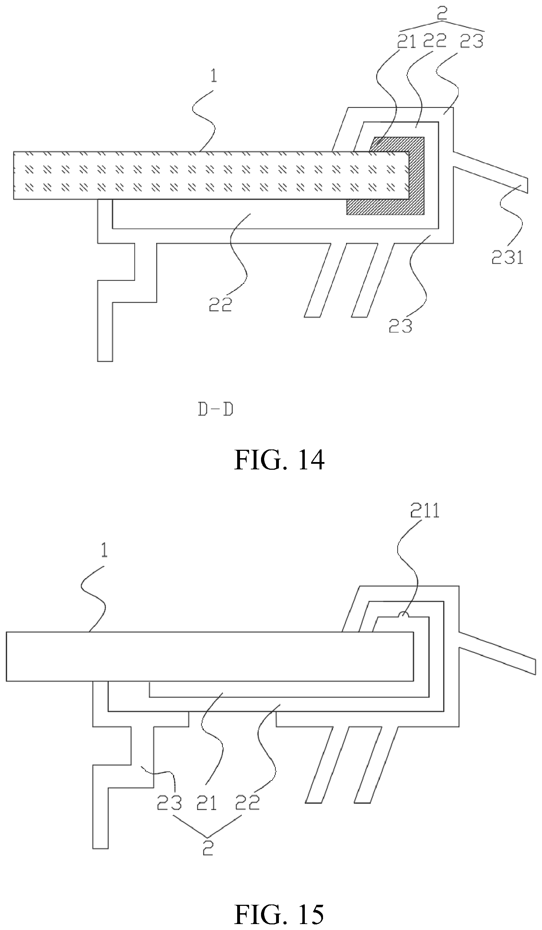

FIG. 14 is an enlarged sectional view of the tri-material injection-molded glass assembly in FIG. 12, taken along line D-D. The second encapsulation layer 22 may be disposed on the first encapsulation layer 21, and partially contacts the surface of the glass 1 or does not contact the surface of the glass 1 at all. The outer side of the third encapsulation layer 23 is provided with a sealing lip 231, and the sealing lip 231 extends outwardly. As illustrated in FIG. 15, FIG. 15 is a modified example of the enlarged sectional view of the tri-material injection-molded glass assembly in FIG. 14, taken along line D-D. The third encapsulation layer 23 made of soft plastic covers three sides of the rigid second encapsulation layer 22 to strengthen the fixing effect. The first connecting portion 211 protrudes from the first encapsulation layer 21.

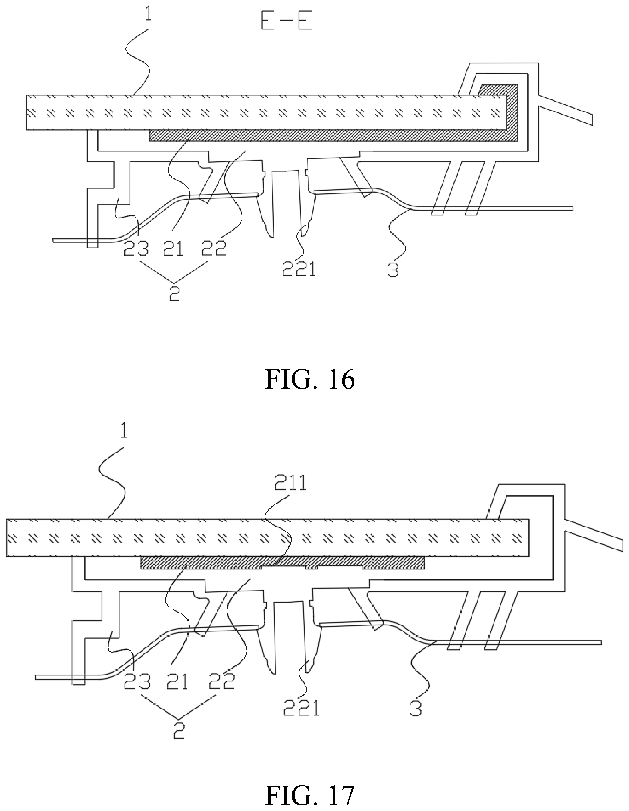

FIG. 16 is an enlarged sectional view of the tri-material injection-molded glass assembly in FIG. 12, taken along line E-E. The first encapsulation layer 21 is injection-molded on the upper surface, the side surface, and the lower surface of the glass 1. The second encapsulation layer 22 is disposed on the outer side of the first encapsulation layer 21, and a mounting portion 221 is provided at the bottom of the second encapsulation layer 22. The mounting portion 221 in FIG. 16 is a stud. The stud includes a base and a column body extending outward. Sealing lips and other sealing structures are provided on the outer side of the third encapsulation layer 23. The quantity of sealing lips 231 is two or more, at least one of the sealing lips 231 is disposed on the base of the mounting portion 221, and the sealing lip 231 abuts against the sheet metal member 3. By disposing the sealing lip 231 on the base of the mounting portion 221, one end of the sealing lip 231 abuts against the sheet metal member 3, thereby forming a good matching relationship between the stud on the second encapsulation layer 22 and the sealing lip 231 on the third encapsulation layer 23. The sealing lip 231 not only plays a sealing role, but also supports and fixes the sheet metal member 3 and the mounting portion 221, making the mounting structure of the stud more stable.

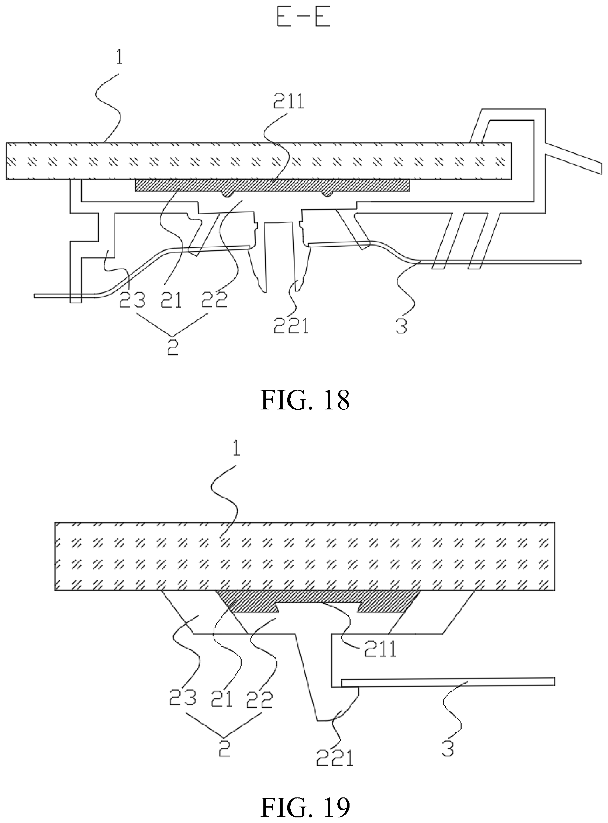

As illustrated in FIG. 17, the first encapsulation layer 21 is provided on the lower surface of the glass, and a first connecting portion 211 is provided between the first encapsulation layer 21 and the second encapsulation layer 22 to increase the connection stability between the first encapsulation layer 21 and the second encapsulation layer 22. Specifically, the first connecting portion 211 may be a recess, or may be a protruding structure as illustrated in FIG. 18.

As illustrated in FIG. 19, the first encapsulation layer 21 is provided below the glass 1, and the second encapsulation layer 22 is provided on the first encapsulation layer 21 and does not contact with the glass 1. One end of the second encapsulation layer 22 is provided with a mounting portion 221, the mounting portion 221 is designed in the shape of a bracket. The second encapsulation layer 22 and the mounting portion 221 are injection-molded from rigid plastic, without a need for additional procurement and assembly of a separate bracket.

Finally, it may be noted that although the above embodiments have been described in the specification text and the accompanying drawings of the disclosure, the protection scope of the disclosure shall not be limited thereby. Any technical solution produced by equivalent structural or equivalent process replacement or modification based on the contents recorded in the specification text and the accompanying drawings of the disclosure by utilizing the essential concept of the disclosure, as well as directly or indirectly applying the technical solutions of the above embodiments to other related technical fields, shall all be included within the protection scope of the disclosure.

## Claims

1. A tri-material injection-molded glass assembly, comprising:
a glass; and
an encapsulation covering at least one surface of at least one edge portion of the glass, wherein the encapsulation comprises a first encapsulation layer, a second encapsulation layer, and a third encapsulation layer; wherein
the first encapsulation layer is injection-molded on at least one surface of an edge portion of the glass;
at least a portion of the second encapsulation layer is injection-molded to cover the first encapsulation layer, and a hardness of the second encapsulation layer is greater than a hardness of the first encapsulation layer; and
the third encapsulation layer is injection-molded to cover at least a portion of the second encapsulation layer, and a hardness of the third encapsulation layer is less than the hardness of the second encapsulation layer.

2. The tri-material injection-molded glass assembly according to claim 1, wherein the first encapsulation layer is provided with a first connecting portion, and the first connecting portion is disposed on a surface of the first encapsulation layer in contact with the second encapsulation layer.

3. The tri-material injection-molded glass assembly according to claim 2, wherein the first connecting portion is a protrusion or a recess.

4. The tri-material injection-molded glass assembly according to claim 3, wherein the first connecting portion on a side surface of the first encapsulation layer is a protrusion.

5. The tri-material injection-molded glass assembly according to claim 1, wherein the second encapsulation layer is provided with a second connecting portion, and the second connecting portion is disposed on a surface of the second encapsulation layer in contact with the third encapsulation layer.

6. The tri-material injection-molded glass assembly according to claim 1, wherein a contact length between the first encapsulation layer and an inner surface of the glass is less than 5mm.

7. The tri-material injection-molded glass assembly according to claim 1, wherein a thickness of the first encapsulation layer is not greater than 5mm.

8. The tri-material injection-molded glass assembly according to claim 1, wherein the first encapsulation layer and the third encapsulation layer are made of a soft plastic, and the second encapsulation layer is made of a rigid plastic.

9. The tri-material injection-molded glass assembly according to claim 8, wherein the first encapsulation layer and the third encapsulation layer are made of a same material.

10. The tri-material injection-molded glass assembly according to claim 8, wherein the soft plastic has a Shore hardness of 60 - 95.

11. The tri-material injection-molded glass assembly according to claim 8 or 9, wherein the soft plastic is thermoplastic elastomer (TPE), polyvinyl chloride (PVC), polyurethane (PU), or ethylene propylene diene monomer (EPDM).

12. The tri-material injection-molded glass assembly according to claim 8, wherein the rigid plastic has a Rockwell hardness of 40 - 95.

13. The tri-material injection-molded glass assembly according to claim 12, wherein the rigid plastic is polypropylene (PP), polyvinyl chloride (PVC), polyamide (PA), polyoxymethylene (POM), polycarbonate (PC), acrylonitrile butadiene styrene (ABS), or styrene-acrylonitrile copolymer (SAN).

14. The tri-material injection-molded glass assembly according to claim 1, wherein the second encapsulation layer comprises a mounting portion, and the mounting portion is integrally injection-molded with the second encapsulation layer.

15. The tri-material injection-molded glass assembly according to claim 14, further comprising:
a sheet metal member provided with a first through hole penetrating the sheet metal member in a thickness direction of the sheet metal member; and
wherein the mounting portion is a stud, and the stud extends into the first through hole and is fixedly connected to the sheet metal member.

16. The tri-material injection-molded glass assembly according to claim 15, wherein the stud is provided with a fixing groove configured for snap-fit engagement with the sheet metal member.

17. The tri-material injection-molded glass assembly according to claim 15, wherein the third encapsulation layer is provided with a sealing lip protruding outwardly.

18. The tri-material injection-molded glass assembly according to claim 17, wherein a number of sealing lips is two or more, and at least one of the sealing lips abuts against the sheet metal member.
